# EUROPEAN PATENT APPLICATION

(11) **EP 2 778 249 A1**
(43) Date of publication of application: **17.09.2014**
(21) Application number: 14159187.5
(22) Date of filing: 12.03.2014
(51) Int. Cl.: C23C 4/00, F01D 5/18, F01D 5/28, F23R 3/00

(54) **Coating methods and pressurized masking systems for controlling coating microstructures**

(30) Priority: 14.03.2013 US 201313826266
(71) Applicant: General Electric Company, Schenectady, New York 12345 (US)
(72) Inventor: Depalma III, Michael Anthony, Greenville, SC 29615 (US); Berkebile, Matthew Paul, Pooler, GA 31322 (US); Walsh, Patrick Thomas, Greenville, SC 29615 (US); Bellino, Mark Carmine, Greenville, SC 29615 (US); Simpson, Michelle Fullerton, Greenville, SC 29615 (US)
(74) Representative: Picker, Madeline Margaret

(57) **Abstract**

Methods 300 for coating a target surface of an article having one or more passageways include fluidly connecting 300 a temperature controlled fluid to at least one passageway, passing 320 the temperature controlled fluid through the at least one passageway, wherein the temperature controlled fluid at least partially controls a temperature profile of the article, and coating 330 the target surface, wherein the temperature profile of the article at least partially controls a microstructure of the coating.

## Description

The subject matter disclosed herein relates to coating methods and temperature controlled systems for coating and, more specifically, to coating methods and pressurized masking systems for controlling coating microstructures.

In gas turbine engines, such as aircraft engines for example, air is drawn into the front of the engine, compressed by a shaft-mounted rotary-type compressor, and mixed with fuel. The mixture is burned, and the hot exhaust gases are passed through a turbine mounted on a shaft. The flow of gas turns the turbine, which turns the shaft and drives the compressor and fan. The hot exhaust gases flow from the back of the engine, driving it and the aircraft forward.

During operation of gas turbine engines, the temperatures of combustion gases may exceed 3,000°F, considerably higher than the melting temperatures of the metal parts of the engine which are in contact with these gases. Operation of these engines at gas temperatures that are above the metal part melting temperatures is a well-established art, and depends in part on supplying a cooling air to the outer surfaces of the metal parts through various methods. The metal parts of these engines that are particularly subject to high temperatures, and thus require particular attention with respect to cooling, are the metal parts forming combustors and parts located aft of the combustor.

The metal temperatures can be maintained below melting levels by using passageways such as cooling holes incorporated into some engine components. Sometimes, additional coatings, such as thermal barrier coatings (TBCs), may also be applied to the component. However, the microstructures of the coatings can depend on the temperature of the components and/or the surrounding atmosphere.

As a result, the properties of the coatings may depend on temperature during and after coating application. One possible method for influencing the temperature is coating in intervals to allow the component to change temperature between coating applications. However, such methods can increase cycle time by slowing down the overall coating process. Another possible method for influencing the temperature is preheating or precooling the component via ovens, torches, induction, fans, liquids or the like. However, these methods do not control the temperature during the coating application and also slow down the overall coating process time.

Accordingly, alternative coating methods and temperature controlled coating systems would be welcomed in the art.

In one embodiment, a method is disclosed for coating a target surface of an article having one or more passageways. The method includes fluidly connecting a temperature controlled fluid to at least one passageway, passing the temperature controlled fluid through the at least one passageway, wherein the temperature controlled fluid at least partially controls a temperature profile of the article, and coating the target surface, wherein the temperature profile of the article at least partially controls a microstructure of the coating.

In another embodiment, a temperature controlled coating system is disclosed for coating a target surface of an article having one or more passageways. The temperature controlled coating system includes a temperature controlled fluid source that fluidly connects to at least one passageway of the article and passes a temperature controlled fluid through the passageway, wherein the temperature controlled fluid at least partially controls a temperature profile of the article, and a part coater that coats the target surface with a coating, wherein the temperature profile of the article at least partially controls a microstructure of the coating.

These and additional features provided by the embodiments discussed herein will be more fully understood in view of the following detailed description, in conjunction with the drawings.

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a schematic illustrated of a temperature controlled coating system according to one or more embodiments shown or described herein;
FIG. 2 is a perspective view of a temperature controlled coating system according to one or more embodiments shown or described herein;
FIG. 3 is a perspective view of another temperature controlled coating system according to one or more embodiments shown or described herein; and,
FIG. 4 is a method of coating an article using a temperature controlled coating system according to one or more embodiments shown or described herein.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Temperature controlled coating systems disclosed herein generally comprise a temperature controlled fluid source and a part coater to coat the target surface of an article comprising passageways. While the part coater coats the target surface with a coating, temperature controlled fluid is fluidly connected to the passageways and passed there through to at least partially control the temperature profile of the article, which in turn at least partially controls the microstructure of the coating. Temperature controlled coating systems, and methods of coating a target surface of an article will be discussed in more detail herein.

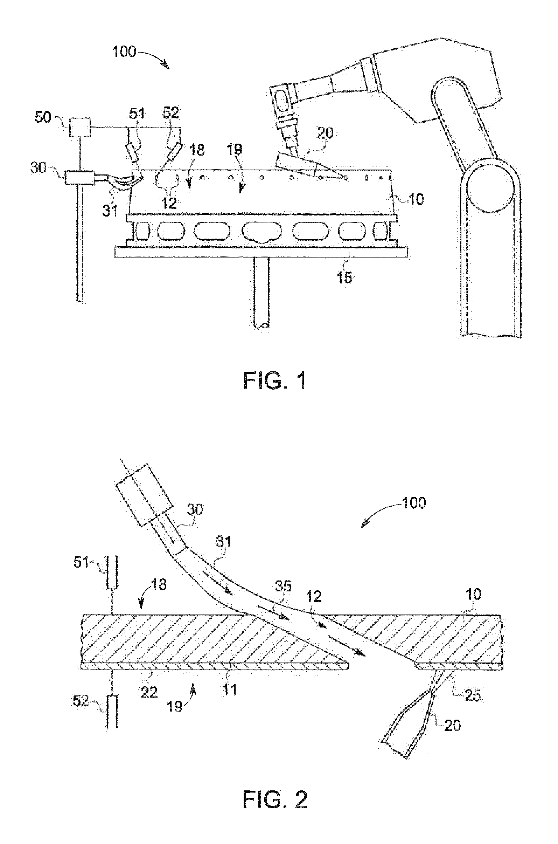

Referring now to FIGS. 1-3, a temperature controlled coating system 100 is illustrated comprising a part coater 20 and a temperature controlled fluid source 30 for coating an article 10. As discussed above, the article 10 can comprise a variety of different types of articles such as components for a turbine. For example, in some embodiments, the article 10 can comprise a transition piece, liner, bucket, blade, vane, nozzle, or shroud. In some embodiments, the article 10 can comprise a turbine component such as a hot gas path component or a combustion component. In other embodiments, the article 10 can comprise any other component of a turbine such as a component for a gas turbine, industrial gas turbine, steam turbine or the like.

The article 10 can have a temperature profile that comprises the specific temperature at each respective location on and about the article 10. As will become appreciated herein, the temperature profile can vary with respect to location and can depend on a variety of factors such as external temperatures, the temperature of the coating and the like. Specifically, the temperature profile can also depend at least in part on the temperature of the temperature controlled fluid that passes through the passageways 12.

The article 10 comprises one or more passageways 12 passing at least partially through the article 10. For example, in some embodiments, the one or more passageways 12 pass from a first end 18 to a second end 19. However, in other embodiments (not illustrated), the one or more passageways 12 may pass from a first end 18, serpentine through a portion of the article 10 and then exit back through the first end 18 without breaching the second end 19. The passageways 12 can thus comprise any passage that at least partially passes through the article 10 and can allow for temperature controlled fluid 35 that passes there through to at least partially control the temperature profile of the article 10 as will become appreciated herein. In some embodiments, such as when the article 10 comprises a turbine component, at least one of the one or more passageways 12 can comprise a cooling hole. As used herein, "cooling hole" refers to a passageway 12 that passes from a first end 18 to a second end 19 of the article 10 and that is used to help cool the article 10 during operation.

As best illustrated in FIGS. 2-3, the second end 19 of the article 10 comprises a target surface 11 that is to be coated with a coating 22. The target surface 11 may be coated prior to first use, during routine or unscheduled repair maintenance, or as otherwise necessary depending on the life of the article 10. As used herein, "coated" refers to at least partially applying a new material to a surface such as through the use of a thermal spray gun or the like as will become appreciated herein.

In some embodiments, such as when the article 10 comprises a hot gas path component, the coating 22 on the target surface 11 of the article 10 may comprise a thermal barrier coating ("TBC"). The TBC can comprise one or more layers of metal and/or ceramic coating material applied to the target surface 11 of the article 10 to impede the transfer of heat from hot combustion gases to the article 10, thus insulating the article 10 from the hot combustion gas. The presence of the TBC on the target surface 11 may allow for hotter combustion temperatures than would otherwise be possible with just the native article 10. Any suitable composition of TBC may be applied. For example, in some embodiments the TBC can comprise a bond layer of MCrAlY, wherein M is preferably Ni, Co, or a combination thereof, followed by a layer of yttria stabilized zirconia (YSZ).

In some embodiments, the article 10 may be disposed on a support stand 15 prior to or during the coating as will become appreciated herein. The support stand 15 may be stationary or mobile (e.g., rotatable) and position the article 10 relative to the part coater 20 and the temperature controlled fluid source 30 when coating the target surface 11 of the article 10.

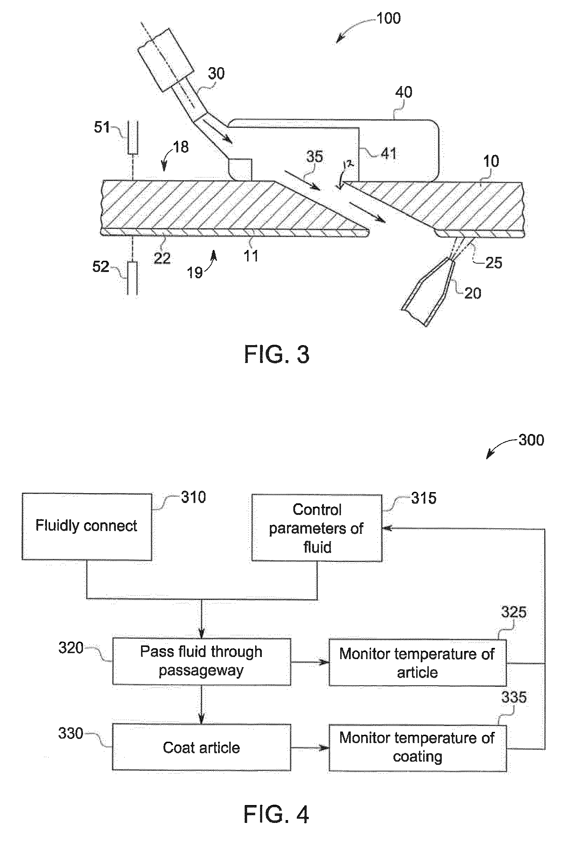

Still referring to FIGS. 1-3, the temperature controlled coating system 100 further comprises the part coater 20. The part coater 20 comprises any device that coats a target surface 11 of the article 10 with a coating 22. For example, in some embodiments, the part coater 20 can comprise a thermal spray gun or other device that projects coating material 25 towards the target surface 11 (such as illustrated in FIGS. 2 and 3). In such embodiments, the coating material 25 can comprise pressurized gas or a pressurized liquid (e.g., as water). In other embodiments, the part coater 20 can comprise any other device that coats the target surface 11 of the article 10 with a coating 22.

The part coater 20 may be disposed at any position relative to the article 10 that allows for the coating of the target surface 11. For example, as illustrated in FIG. 1, in some embodiments the article 10 may be disposed on a support stand 15 adjacent the part coater 20. The support stand 15 may then be able to rotate or otherwise displace the article 10 with respect to the part coater 20 and/or the part coater 20 may be able to articulate with respect to the article 10. The part coater 20 may then be used to project or otherwise apply the coating material 25 on the target surface 11 of the article 10.

The part coater 20 may be used for a variety of applications to coat the target surface 11 of the article 10. For example in some embodiments the part coater 20 may be used to coat the target surface with a TBC as discussed above. In some embodiments, the part coater 20 may be used to apply a bond coat to the target surface 11 for the subsequent application of a TBC or other coating. In some embodiments, the part coater 20 may be used to apply a paint coat to the target surface 11. In some embodiments, the part coater 20 may be used to apply other coatings such as metallic coatings, ceramic coatings, diffusion coatings, dense vertically cracked (DVC) TBC or other adhesive bonding coatings. While specific embodiments have been presented herein, it should be appreciated that these are exemplary only and any other application of the part coater 20 as part of the temperature controlled coating system 100 may also be realized.

Referring still to FIGS. 1-3, the temperature controlled coating system 100 further comprises a temperature controlled fluid source 30. The temperature controlled fluid source 30 comprises a fluid connection 31 that fluidly connects a source of temperature controlled fluid 35 to at least one passageway 12 of the article 10. As used herein, "fluid connection" refers to a connection that allows the temperature controlled fluid 35 to pass from the temperature controlled fluid source 30 to the passageway 12 with negligent loss to the outside environment. The fluid connection can comprise, for example, flexible tubes, hoses, pipes or any other conduit that directs the passage of the temperature controlled fluid 35 to the one or more passageways 12.

In one embodiment, such as that illustrated in FIG. 2, the fluid connection 31 may comprise a tube that directly connects the output of the temperature controlled fluid source 30 to the first end 18 of the passageway 12. In some embodiments, the fluid connection 31 may comprise a single tube between the temperature controlled fluid source 30 and a single passageway 12 (such as that illustrated in FIG. 2). In other embodiments, the fluid connection may comprise a single tube leaving the temperature controlled fluid source 30 that breaks off into segments that connect to a plurality of passageways 12 (such as that illustrated in FIG. 1). In even other embodiments, the fluid connection 31 may comprise a plurality of tubes leaving the temperature controlled fluid source 30 that connects to a single or a plurality of passageways 12. For example, the fluid connection 31 may comprise a plurality of channels of similar or dissimilar temperature controlled fluids 35 that connect to two or more passageways. Moreover, the plurality of channels may comprise different pressures, temperatures, directions or mixtures of temperature controlled fluids 35. It should be appreciated that any other configuration that provides a fluid connection 31 between the temperature controlled fluid source 30 and one or more passageways 12 may alternatively or additionally be realized.

For example, referring now to FIG. 3, in some embodiments the fluid connection 31 may comprise a multi-outlet manifold connection 40 comprising an internal passage 41 that can receive temperature controlled fluid 35 from the temperature controlled fluid source 30 and fluidly distribute it to one or more passageways. The multi-outlet manifold connection 40 can thereby attach directly to the first end 18 of the article 10 and distribute the temperature controlled fluid 35 to a wide area about the article 10. Any passageways 12 within that area will thereby have temperature controlled fluid 35 fluidly pass there through.

The temperature controlled fluid 35 can comprise any medium that can pass through the passageway 12 at a controlled temperature and/or a controlled pressure. The temperature controlled fluid 35 may be heated or cooled through any suitable means prior to passing through the at least one passageway 12. For example, in some embodiments, the temperature controlled fluid 35 may be heated by passing through or near an induction coil, flame, or other heating source. Alternatively, the temperature controlled fluid 35 may be cooled by passing through or near a chiller, liquid nitrogen or other suitable cooling source. In some embodiments, the temperature controlled fluid may comprise a plurality of fluids, at least one of which is temperature controlled. For example, a heated (or cooled) fluid may be mixed with a room temperature fluid at a rate that achieves a final target temperature.

In some embodiments, the temperature controlled fluid 35 may comprise one or more gasses such as an inert gas. In some embodiments, the temperature controlled fluid 35 may comprise water with or without abrasives distributed therein. While specific embodiments of temperature controlled fluid 35 have been presented herein, it should be appreciated that additional and alternative temperature controlled fluids 35 may also be realized. In some embodiments, the type of temperature controlled fluid 35 may be selected in part on its thermal transfer characteristics with the article 10.

Still referring to FIGS. 1-3, the temperature controlled coating system 100 may further comprise a controller 50. The controller 50 can comprise any electrical or mechanical device that can control at least one temperature controlled fluid parameter. Temperature controlled fluid parameters refer to any parameter that affects the change in temperature profile of the article 10 based on the temperature controlled fluid 35 that passes there through.

For example, one temperature controlled fluid parameter is the temperature of the temperature controlled fluid 35. By increasing or decreasing the temperature of the temperature controlled fluid 35, the temperature profile of article 10 can also increase or decrease respectively. In such embodiments, the controller 50 may increase or decrease the temperature by communicating with heating and/or cooling sources or by adjusting the resident time of the temperature controlled fluid 35 as it passes through those heating and/or cooling sources. Another temperature controlled fluid parameter is the pressure of the temperature controlled fluid 35. For example, by increasing the pressure, the temperature controlled fluid 35 may pass through the passageway 12 at a faster rate thereby changing its effect on the temperature profile of the article 10. In such embodiments, the controller 50 may increase or decrease the pressure by communicating with a compressor, flow rate valves, or other device that controls the flow of the temperature controlled fluid 35. While specific temperature controlled fluid parameters (and methods of changing the same) have been presented herein, it should be appreciated that these are exemplary only and any other suitable parameter may additionally or alternatively be incorporated.

In some embodiments, the temperature controlled coating system 100 may comprise one or more temperatures sensors. For example, as illustrated in FIGS. 1-3, the temperature controlled coating system 100 may comprise an article temperature sensor 51 and/or a coating temperature sensor 52. The article temperature sensor 51 can measure at least part of the temperature profile of the article 10. In some embodiments, the controller 50 may adjust at least one temperature controlled fluid parameter based at least in part on one or more measurements from the article temperature sensor 51. Likewise, the coating temperature sensor 52 can measure at least part of a second temperature profile of the coating 22. In some embodiments, the controller 50 may adjust at least one temperature controlled fluid parameter based at least in part on one or more measurements from the coating temperature sensor 52.

The article temperature sensor 51 and the coating temperature sensor 52 can comprise any suitable device for measuring the temperature at one or more locations about the article 10 and the coating 22 respectively. For example, the article temperature sensor 51 and the coating temperature sensor 52 can comprise a thermocouple, infrared thermometer, or the like.

In operation, the temperature controlled fluid source 30 thereby passes the temperature controlled fluid 35 through the at least one passageway 12. The temperature controlled fluid 35 thereby at least partially controls the temperature profile of the article 10 by heating or cooling one or more locations. Likewise, the part coater coats the target surface 11 with a coating 22. The part coater can coat the surface before, during, and/or after (or combinations thereof) the temperature controlled fluid 35 is passed through the at least one passageway. The coating 22 will subsequently cool or otherwise stabilize to form its ultimate microstructure. However, during said cooling or other stabilization, the microstructure of the coating 22 and/or the article 10 will be at least partially controlled by the temperature profile of the article 10. By controlling the coating's and/or article's microstructure, their thermal resistance, ductility, toughness or the like can be controlled so that the resulting product has properties tailored for the particular material and/or application. Accordingly, the temperature controlled fluid 35 can assist in the production of quality coating 22 on an article 10 (potentially without even the need for cycling the coating applications) by controlling the temperature profile of the article 10 before, during and/or after the coating process.

For example, if the coating process brings about an excess amount of heat (such as might occur when using a thermal spray gun), the temperature controlled fluid 35 may be cooled while it is passed through one or more passageways 12 to cool the article 10 before, during and/or after coating. This may prevent overheating and reduce or eliminate the need to cycle the coating application. Conversely, if the coating application requires an elevated temperature that is not inherently provided by the part coater 20, the temperature controlled fluid 35 may be heated while it is passed through one or more passageways 12 to heat the article 10 before, during or after coating.

In some embodiments, the temperature controlled coating system 100 can comprise a temperature controlled masking system wherein the temperature controlled fluid 35 can also be used to mask the at least one passageway 12 from coating material 25. Specifically, the temperature controlled fluid 35 may be passed through the at least one passageway 12 with a positive energy to prevent the permanent altering of a cross sectional area of the at least one passageway 12 by the coating material 25 (or particulates thereof). As used herein, "prevent the permanent altering of a cross sectional area" (and variants thereof) refers to removing and/or preventing substantially all of the coating material 25 that may enter the passageway 12 so that the cross sectional area of the passageway is not substantially reduced by a permanent obstruction or increased due to erosion, deformation or the like. Examples of obstructions that would permanently alter the cross sectional area of the passageway 12 include, for example, large particulates lodged against a wall, a clumping of coating material 25 or the like. The temperature controlled fluid 35 may thereby comprise any material that can be forced through the one or more passageways 12 to impact on and remove potential obstructions from the coating material 25 that would alter the cross sectional area.

Referring now to FIGS. 1-4, a method 300 is illustrated for coating a target surface 11 of an article 10 comprising one or more passageways 12. The method 300 first comprises fluidly connecting the temperature controlled fluid source 30 comprising the temperature controlled fluid 35 to at least one passageway 12 in step 310. Simultaneously, sequentially or in combinations thereof, the method 300 can further comprise controlling one or more parameters of the temperature controlled fluid 35 (such as by using a controller 50 in communication with a heating source, cooling source, pressure source or the like) in step 315.

The method 300 further comprises passing the temperature controlled fluid 35 through the at least one passageway 12 in step 320. As a result of its relatively elevated or reduced temperature, the temperature controlled fluid 35 will at least partially control the temperature profile of the article 10. Before, during and/or after the temperature controlled fluid 35 is passed through the at least one passageway 12 in step 320, the target surface 11 of the article 10 is coated with the coating 22 in step 330. Furthermore, the temperature profile of the article 10 (which is at least partially controlled by the temperature controlled fluid 35 passing through the at least one passageway 12 in step 320) at least partially controls the microstructure of the coating 22.

In some embodiments, the method 300 may further comprise monitoring the temperature profile of the article 10 in step 325 and/or monitoring the temperature profile of the coating in step 335. The monitoring of said temperature profiles in steps 325 and/or 335 may then be utilized when controlling at least one temperature controlled fluid parameter in step 315. The method 300 may then continue until the coating 22 is completely applied to the article 10 such that the temperature profile of the article 10 no longer needs to be at least partially controlled by the temperature controlled fluid 35 passing through the at least one passageway 12. By coating the article 10 in step 330 before, during and/or after (or combinations thereof) passing through temperature controlled fluid 35 in step 320, the temperature controlled fluid 35 can be used to preheat the article 10 before coating in step 330, maintain the temperature of the article 10 in a certain range while coating in step 330 (and potentially be used to mask the passageway 12), and/or cool down the article 10 after coating in step 330.

It should now be appreciated that temperature controlled coating systems may be used to at least partially control the temperature profile of an article while it is being coated. This can thereby increase coating process control and subsequent coating yield rates. Moreover, dynamically controlling the temperature profile of the article through temperature controlled fluid can reduce process by time by eliminating necessary cooling/rest periods and maintain or improve the overall quality of the coated article.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which fall within the scope of the invention as defined in the appended claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method of coating a target surface of an article comprising one or more passageways, the method comprising:
   fluidly connecting a temperature controlled fluid to at least one passageway;
   passing the temperature controlled fluid through the at least one passageway, wherein the temperature controlled fluid at least partially controls a temperature profile of the article; and,
   coating the target surface, wherein the temperature profile of the article at least partially controls a microstructure of the coating.
2. The method of clause 1 further comprising adjusting at least one temperature controlled fluid to at least partially control the microstructure of the coating.
3. The method of any preceding clause, wherein adjusting at least one temperature controlled fluid parameter comprises adjusting a temperature of the temperature controlled fluid.
4. The method of any preceding clause, wherein adjusting the temperature of the temperature controlled fluid comprises increasing the temperature of the temperature controlled fluid.
5. The method of any preceding clause, wherein adjusting at least one temperature controlled fluid parameter comprises adjusting a pressure of the temperature controlled fluid.
6. The method of any preceding clause further comprising monitoring the temperature profile of the article, wherein the at least one temperature controlled fluid parameter is adjusted based at least in part on the temperature profile of the article.
7. The method of any preceding clause further comprising monitoring a second temperature profile of the coating, wherein the at least one temperature controlled fluid parameter is adjusted based at least in part on the second temperature profile of the coating.
8. The method of any preceding clause, wherein the temperature controlled fluid comprises a plurality of fluids, at least one of which are temperature controlled.
9. The method of any preceding clause, wherein the article comprises a turbine component.
10. The method of any preceding clause, wherein at least one of the one or more passageways comprises a cooling hole for the turbine component.
11. The method of any preceding clause, wherein the coating comprises a thermal barrier coating.
12. The method of any preceding clause, wherein passing the temperature controlled fluid through the at least one passageway occurs at least partially while coating the target surface.
13. The method of any preceding clause, wherein the temperature controlled fluid passing through the at least one passageway prevents the coating from permanently altering a cross sectional area of the at least one passageway.
14. A temperature controlled coating system for coating a target surface of an article comprising one or more passageways, the temperature controlled coating system comprising:
   a temperature controlled fluid source that fluidly connects to at least one passageway of the article and passes a temperature controlled fluid through the passageway, wherein the temperature controlled fluid at least partially controls a temperature profile of the article; and,
   a part coater that coats the target surface with a coating, wherein the temperature profile of the article at least partially controls a microstructure of the coating.
15. The temperature controlled coating system of any preceding clause further comprising a controller that adjusts at least one temperature controlled fluid to at least partially control the microstructure of the coating.
16. The temperature controlled coating system of any preceding clause, wherein the at least one temperature controlled fluid parameter comprises a temperature of the temperature controlled fluid.
17. The temperature controlled coating system of any preceding clause further comprising an article temperature sensor that measures at least part of the temperature profile of the article, wherein the controller adjusts at least one temperature controlled fluid parameter based at least in part on one or more measurements of the article temperature sensor.
18. The temperature controlled coating system of any preceding clause, wherein the article comprises a turbine component, and wherein at least one of the one or more passageways comprises a cooling hole for the turbine component.
19. The temperature controlled coating system of any preceding clause, wherein passing the temperature controlled fluid through the at least one passageway can at least partially occur while coating the target surface.
20. The temperature controlled coating system of any preceding clause, wherein the temperature controlled coating system comprises a temperature controlled masking system wherein the temperature controlled fluid passing through the at least one passageway prevents the coating from permanently altering a cross sectional area of the at least one passageway.

## Claims

1. A method (300) of coating a target surface of an article comprising one or more passageways, the method comprising:
fluidly connecting (310) a temperature controlled fluid to at least one passageway;
passing (320) the temperature controlled fluid through the at least one passageway, wherein the temperature controlled fluid at least partially controls a temperature profile of the article; and,
coating (330) the target surface, wherein the temperature profile of the article at least partially controls a microstructure of the coating.

2. The method of claim 1, further comprising adjusting at least one temperature controlled fluid to at least partially control the microstructure of the coating.

3. The method of claim 2, wherein adjusting at least one temperature controlled fluid parameter comprises at least one of:
adjusting a temperature of the temperature controlled fluid, and
adjusting a pressure of the temperature controlled fluid.

4. The method of claim 3, comprising adjusting the temperature of the temperature controlled fluid by increasing the temperature of the temperature controlled fluid.

5. The method of any preceding claim, further comprising monitoring (325) the temperature profile of the article, wherein the at least one temperature controlled fluid parameter is adjusted based at least in part on the temperature profile of the article.

6. The method of claim 5, further comprising monitoring (335) a second temperature profile of the coating, wherein the at least one temperature controlled fluid parameter is adjusted based at least in part on the second temperature profile of the coating.

7. The method of any preceding claim, wherein the temperature controlled fluid comprises a plurality of fluids, at least one of which are temperature controlled.

8. The method of any preceding claim, wherein the article comprises a turbine component, wherein:
at least one of the one or more passageways comprises a cooling hole for the turbine component, and/or
the coating comprises a thermal barrier coating.

9. The method of any preceding claim, wherein passing the temperature controlled fluid through the at least one passageway occurs at least partially while coating the target surface, wherein, preferably, the temperature controlled fluid passing through the at least one passageway prevents the coating from permanently altering a cross sectional area of the at least one passageway.

10. A temperature controlled coating system (100) for coating a target surface (11) of an article (10) comprising one or more passageways (12), the temperature controlled coating system comprising:
a temperature controlled fluid source (60) that fluidly connects to at least one passageway (12) of the article (10) and passes a temperature controlled fluid (35) through the passageway (12), wherein the temperature controlled fluid (35) at least partially controls a temperature profile of the article (10); and
a part coater (20) that coats the target surface (11) with a coating (22), wherein the temperature profile of the article (10) at least partially controls a microstructure of the coating (22).

11. The temperature controlled coating system of claim 10, further comprising a controller (50) that adjusts at least one temperature controlled fluid (35) to at least partially control the microstructure of the coating (22).

12. The temperature controlled coating system of claim 11, wherein the at least one temperature controlled fluid parameter comprises a temperature of the temperature controlled fluid (35).

13. The temperature controlled coating system of claim 11 or claim 12 further comprising an article temperature sensor (51) that measures at least part of the temperature profile of the article (10), wherein the controller (50) adjusts at least one temperature controlled fluid parameter based at least in part on one or more measurements of the article temperature sensor (51).

14. The temperature controlled coating system of claim 11, 12 or 13, wherein the article (10) comprises a turbine component, and wherein at least one of the one or more passageways (12) comprises a cooling hole for the turbine component.

15. The temperature controlled coating system of claim 11, 12, 13 or 14, wherein passing the temperature controlled fluid (35) through the at least one passageway (12) can at least partially occur while coating the target surface (11), wherein, preferably, the temperature controlled coating system (100) comprises a temperature controlled masking system wherein the temperature controlled fluid (35) passing through the at least one passageway (4) prevents the coating (22) from permanently altering a cross sectional area of the at least one passageway (12).
